# EUROPEAN PATENT APPLICATION

(11) **EP 4 572 099 A1**
(43) Date of publication of application: **18.06.2025**
(21) Application number: 23851234.7
(22) Date of filing: 27.03.2023
(51) Int. Cl.: H02K 3/12, H02K 3/28, H02K 1/16, H02K 29/03

(54) **STATOR, HAIRPIN MOTOR, POWERTRAIN, AND VEHICLE**

(30) Priority: 12.08.2022 CN 202210970372
(71) Applicant: Huawei Digital Power Technologies Co., Ltd., Shenzhen, Guangdong 518043 (CN)
(72) Inventor: LIN, Yingqian, Shenzhen, Guangdong 518043 (CN); JIANG, Kui, Shenzhen, Guangdong 518043 (CN); WANG, Yu, Shenzhen, Guangdong 518043 (CN); LUO, Xian, Shenzhen, Guangdong 518043 (CN)
(74) Representative: Isarpatent
(86) International application number: PCT/CN2023/084051
(87) International publication number: WO 2024/032001

(57) **Abstract**

This application relates to the field of motor winding technologies, and specifically, to a stator, a flat wire motor, a powertrain, and a vehicle, so that a fundamental winding factor is high and a harmonic winding factor is low. The stator includes a stator core and a stator winding, a plurality of stator slots are evenly provided on an inner wall of the stator core in a circumferential direction, the stator winding includes flat wire conductors inserted in the stator slots, N layers of flat wire conductors are disposed in any one of the stator slots, and N is an even number greater than or equal to 4. The flat wire conductors are connected to form m phase windings, each phase winding includes a plurality of phase units that are evenly disposed at spacings in the circumferential direction of the stator core, any phase unit of each phase winding includes at least two phase bands, each phase band of any phase unit includes two adjacent layers of flat wire conductors, and adjacent phase bands of any phase unit are staggered by one stator slot. The stator winding is a short-pitch winding, which can well suppress torque fluctuation during operation of a motor, reduces back electromotive force harmonics of the motor, and improves performance of the motor.

## Description

### CROSS-REFERENCE TO RELATED APPLICATIONS

This application claims priority to Chinese Patent Application No. 202210970372.1, filed with the China National Intellectual Property Administration on August 12, 2022 and entitled "STATOR, FLAT WIRE MOTOR, POWERTRAIN, AND VEHICLE", which is incorporated herein by reference in its entirety.

### TECHNICAL FIELD

This application relates to the field of motor winding technologies, and specifically, to a stator, a flat wire motor, a powertrain, and a vehicle.

### BACKGROUND

Because a flat wire motor has a high copper fill factor, heat dissipation of a winding of the motor is facilitated, a voltage endurance capability of the winding can be improved, an end length of the winding can be reduced, and the like. Accordingly, a torque density and a power density of the motor can be improved. Therefore, the flat wire motor has become an important measure to promote vehicle lightweight, increase an endurance mileage of an electric vehicle, improve space utilization of a vehicle, and reduce costs of a powertrain.

Currently, an existing winding manner of a stator winding of a flat wire motor is mostly full-pitch winding. Specifically, the motor includes a stator core, stator slots are provided in a circumferential direction of the stator core, and the stator winding is wound on the stator core by using the stator slots. The flat wire motor of a full-pitch structure has a high harmonic winding factor, and torque fluctuation is large during operation, which worsens noise, vibration, and harshness (noise, vibration, and harshness, NVH) of the motor and degrades performance of the motor. In an existing method, the stator winding may be configured as a short-pitch winding to reduce the harmonic winding factor of the flat wire motor, to improve NVH performance of an electric vehicle. However, for a short-pitch winding of an existing flat wire motor, a short-pitch configuration manner is limited by a winding form, and it is difficult to effectively reduce a harmonic winding factor when a high fundamental winding factor is obtained. As a result, performance of the motor is degraded.

### SUMMARY

This application provides a stator, a flat wire motor, a powertrain, and a vehicle, and provides a flat wire short-pitch winding structure to effectively reduce a harmonic winding factor when a high fundamental winding factor is ensured, thereby improving performance of a motor.

According to a first aspect, this application provides a stator of a flat wire motor. The stator includes a stator core and a stator winding, a plurality of stator slots are evenly provided on an inner wall of the stator core in a circumferential direction, the stator winding includes flat wire conductors inserted in the stator slots, N layers of flat wire conductors are disposed in any one of the stator slots, and N is an even number greater than or equal to 4. The flat wire conductors are connected to form m phase windings, each phase winding includes a plurality of phase units that are evenly disposed at spacings in the circumferential direction of the stator core, any phase unit of each phase winding includes at least two phase bands, each phase band of any phase unit includes two adjacent layers of flat wire conductors, and adjacent phase bands of any phase unit are staggered by one stator slot.

The stator in this application includes a stator core and a stator winding. The stator core is provided with a plurality of stator slots configured to accommodate flat wire conductors, and N layers of flat wire conductors are disposed in any one of the stator slots. The flat wire conductors are connected to form m phase windings, each phase winding includes a plurality of phase units, and the phase units are evenly disposed at spacings in a circumferential direction of the stator core. In any phase unit of each phase winding, two adjacent layers of flat wire conductors form one phase band, and adjacent phase bands are staggered by one stator slot. Such an arrangement structure allows an equivalent coil pitch of the obtained flat wire motor to be less than a pole pitch of the flat wire motor, and the obtained stator winding is a short-pitch winding. According to tests, the flat wire motor of this structure can have a high fundamental winding factor, to improve output performance of the flat wire motor. In addition, the flat wire motor of this structure further has a low harmonic winding factor, to suppress torque fluctuation of the flat wire motor, reduce back electromotive force harmonics, and improve comprehensive output performance of the flat wire motor. The flat wire motor with the foregoing performance is used in an electric vehicle, so that operating stability of the electric vehicle can be effectively improved, and ride comfort of the electric vehicle can be improved.

In addition, in the stator in this application, each phase band of any phase unit includes only two adjacent layers of flat wire conductors, so that a wire type of the stator winding can be simplified, and head twisting directions at a welding end of the stator winding are consistent, to reduce processing difficulty and facilitate connection.

In a possible implementation of this application, adjacent phase bands of any phase unit are staggered by one stator slot in a clockwise direction or in a counterclockwise direction. In this implementation, adjacent phase bands of one phase unit are staggered in a same direction. In a possible implementation of this application, adjacent phase bands of any phase unit are staggered by one stator slot in a clockwise direction and a counterclockwise direction. In this implementation, adjacent phase bands of one phase unit may be staggered in a clockwise direction and a counterclockwise direction alternately, or may be staggered in a clockwise direction first and then staggered in a counterclockwise direction, or may be staggered in a counterclockwise direction first and then staggered in a clockwise direction. In an optional implementation, when adjacent phase bands of any phase unit are staggered by one stator slot in a clockwise direction and a counterclockwise direction, any phase unit is disposed symmetrically along a perpendicular bisector that is perpendicular to an axial direction of the stator core. A quantity of slots and a direction of the stagger between adjacent phase bands are not limited in this application, and may be freely combined, so that an application scope is wider.

In a possible implementation of this application, each phase winding is evenly divided into N/2 parts in the axial direction of the stator core, two adjacent layers of flat wire conductors in each part are connected to form one coil layer, and each part includes two coil layers. In a possible implementation of this application, in each phase winding, adjacent coil layers are connected by using a single crossing wire, that is, cross-layer connection is implemented by using a single crossing wire. This helps simplify a flat wire winding structure and facilitates implementation.

In a possible implementation of this application, two opposite sides of the stator winding in the axial direction of the stator core are a wire insertion end and a welding end respectively, and at the welding end, spans of single crossing wires between different coil layers are equal, so that head twisting angles at the welding end are the same. This simplifies processes of head twisting and welding, and helps simplify a manufacturing process of the stator winding.

In a possible implementation of this application, a plurality of flat wire conductors may be disposed in the stator slots in a same direction, so that head twisting angles at the welding end of the stator winding are consistent, and problems such as difficult head twisting and welding caused by inconsistent head twisting angles at the welding end can be avoided, to further effectively simplify design of the stator winding and facilitate implementation.

In a possible implementation of this application, each phase winding includes at least one branch. In other words, each phase winding may include one branch, two parallel branches, three parallel branches, or a plurality of parallel branches. When each phase winding includes at least two branches, each parallel branch includes flat wire conductors distributed at different layers in phase bands at a same layer in adjacent phase units, and flat wire conductors in one phase band are evenly distributed in different parallel branches. In this way, the parallel branches in each phase winding can maintain electric potential balance, to avoid generation of a circulation current between branches.

In a possible implementation of this application, the stator winding may be a three-phase winding, and the three-phase winding includes a U-phase winding, a V-phase winding, and a W-phase winding.

A quantity of the stator slots provided on the inner wall of the stator core is Z, a quantity of phases of the stator winding is m, a quantity of poles of the stator winding is 2p, P is an integer, a quantity of stator slots per pole per phase is q, and Z, m, 2p, and q satisfy: q=Z/2pm. In a possible implementation of this application, the quantity Z of stator slots may be 48 or 54. In a possible implementation of this application, a quantity of layers of flat wire conductors may be 6 or 10. In a possible implementation of this application, the quantity 2p of poles of flat wire conductors may be 6 or 8.

According to a second aspect, this application provides a flat wire motor. The flat wire motor includes a rotor and the stator according to the first aspect of this application. The rotor is disposed in space enclosed by the inner wall of the stator core.

Because the stator in this application can have a low harmonic winding factor on the basis of a high fundamental winding factor, the flat wire motor including the stator in this application can have features of small vibration, low noise, low stray losses, and low temperature rise.

According to a third aspect, this application provides a powertrain. The powertrain includes a speed reducer and the flat wire motor according to the second aspect of this application. The flat wire motor is in transmission connection to the speed reducer.

According to a fourth aspect, this application provides a vehicle. The vehicle includes the powertrain according to the third aspect of this application.

For technical effects that can be implemented in the third aspect and the fourth aspect, refer to corresponding effect descriptions in the first aspect. Details are not described herein again.

### BRIEF DESCRIPTION OF DRAWINGS

FIG. 1 is a diagram of phase band distribution of a conventional short-pitch winding with a coil pitch of 8;
FIG. 2 is a diagram of phase band distribution of a conventional short-pitch winding with a coil pitch of 7;
FIG. 3 is a diagram of a three-dimensional structure of a stator of a flat wire motor according to an embodiment of this application;
FIG. 4 is a front view of a structure of a stator of a flat wire motor according to an embodiment of this application;
FIG. 5 is a top view of a structure of a stator core according to an embodiment of this application;
FIG. 6 is a diagram of a structure of a hairpin coil according to an embodiment of this application;
FIG. 7 is a top view of a structure of a flat wire conductor that is inserted in a stator slot according to an embodiment of this application;
FIG. 8 is a diagram of phase band distribution of a U-phase winding according to an embodiment of this application;
FIG. 9A and FIG. 9B are a diagram of phase band distribution of a U-phase winding according to another embodiment of this application;
FIG. 10 is an expanded diagram of a single branch of the U-phase winding in FIG. 8;
FIG. 11 is a diagram of a connection structure of a branch 2;
FIG. 12 is an enlarged diagram of a connection structure of some flat wire conductors in FIG. 11;
FIG. 13 is a diagram of structures of a stator core and a U-phase winding of a motor according to an embodiment of this application;
FIG. 14 is a diagram of structures of a stator core and a U-phase winding of a motor according to an embodiment of this application; and
FIG. 15 is a comparison diagram of torque fluctuation at peak torque operating points of motors using a winding in Embodiment 1, a full-pitch winding, and a conventional short-pitch winding.

Reference numerals:
10: stator core; 10a: wire-inlet end; 10b: wire-outlet end; 11: stator slot; 20: stator winding; 20a: wire insertion end;
20b: welding end; 21: flat wire conductor; 22: hairpin coil; 221: leg; 222: connecting portion; 223: bending portion.

### DESCRIPTION OF EMBODIMENTS

To make objectives, technical solutions, and advantages of this application clearer, the following further describes this application in detail with reference to accompanying drawings.

Terms used in the following embodiments are merely intended to describe specific embodiments, but are not intended to limit this application. The singular expressions "one", "a", "the", "the foregoing", "this", and "the one" used in this specification and the appended claims of this application are also intended to include expressions such as "one or more", unless otherwise specified in the context clearly.

Reference to "an embodiment", "some embodiments", or the like described in this specification means that one or more embodiments of this application include a specific feature, structure, or characteristic described with reference to the embodiments. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner.

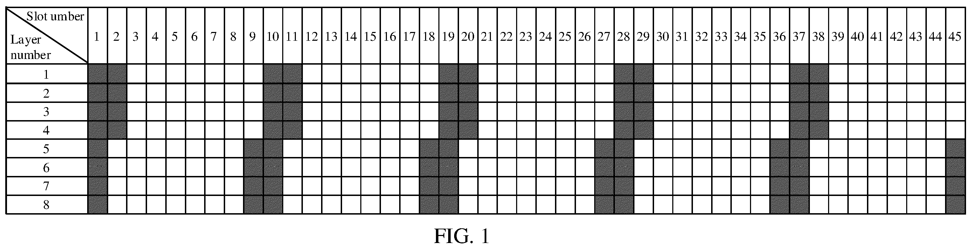

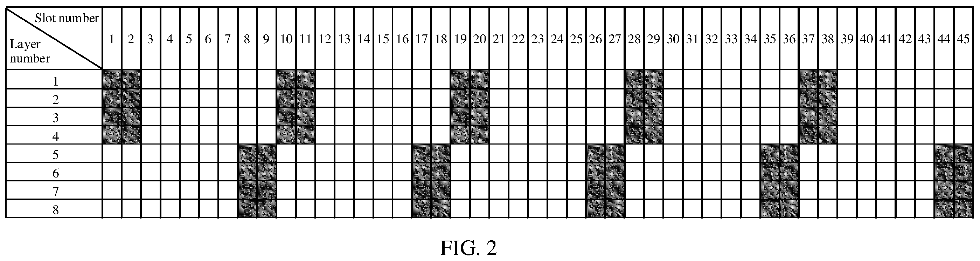

At present, a driving motor of a new energy vehicle is mainly a permanent magnet synchronous motor. In the permanent magnet synchronous motor, a motor stator may use a circular wire conductor or a flat copper wire conductor based on a sectional shape of a stator winding. A motor using a flat copper wire conductor is referred to as a flat wire motor. The flat wire motor can effectively increase a slot fill factor, a power density, and a torque density. With rapid development of the new energy vehicle industry, requirements for a quantity of layers of a flat wire motor, a quantity of parallel branches, and a winding form are increasingly high. A multi-layer and multi-branch solution helps reduce an eddy current loss of a flat wire, improve efficiency of a motor during high-speed operation, and increase diversity of a quantity of series turns of a winding, which greatly improves performance of the motor. However, as forms of a structure of a stator winding increase, especially a short-pitch winding having a plurality of balanced branches, the structure is more complex, and is more difficult to implement. Refer to FIG. 1 and FIG. 2. A structure of an existing stator winding having a short-pitch structure is limited by a winding connection form, and it is difficult to achieve both a high fundamental winding factor and a low harmonic winding factor, resulting in a high additional loss, low efficiency, and large vibration and noise of a flat wire motor. To resolve the foregoing problems, an embodiment of this application provides a stator of a flat wire motor.

For ease of understanding, the following first describes technical terms used in this application.

Stator: A stator is a stationary part in a motor, and the stator generates a rotating magnetic field.

Rotor: A rotor is a rotating part in a motor, and the rotor implements conversion between electric energy and mechanical energy.

Quantity of poles: A quantity of poles is a quantity of magnetic poles of a motor. The magnetic poles are divided into N poles and S poles. Generally, one N pole and one S pole are referred to as one pair of magnetic poles, that is, one pole pair. Therefore, if the motor has one, two, three, or four pole pairs, the motor has two, four, six, or eight poles.

Pole pitch: A pole pitch of a winding is a distance on a circumferential surface occupied by each magnetic pole. For an alternating current motor, a pole pitch is a slot distance occupied by each magnetic pole along an inner circle of a stator core, and is indicated by a quantity of slots. The pole pitch f is a ratio of a quantity Z of stator slots to a quantity 2p of magnetic poles, that is, f=z/2p.

Coil pitch: A coil pitch is a quantity of slots between two active sides of one coil. For example, if the coil pitch y is 6, the two active sides of the coil are separated by six slots, that is, the two active sides are embedded in a first slot and a seventh slot respectively.

Quantity q of slots per pole per phase: A quantity of slots occupied by each phase winding under each magnetic pole is referred to as a quantity of slots per pole per phase.

In addition, winding manners of a stator winding include full-pitch winding and short-pitch winding. Full-pitch winding means that a coil pitch of the stator winding is equal to a pole pitch of the stator winding, and short-pitch winding means that a coil pitch of the stator winding is less than a pole pitch of the stator winding.

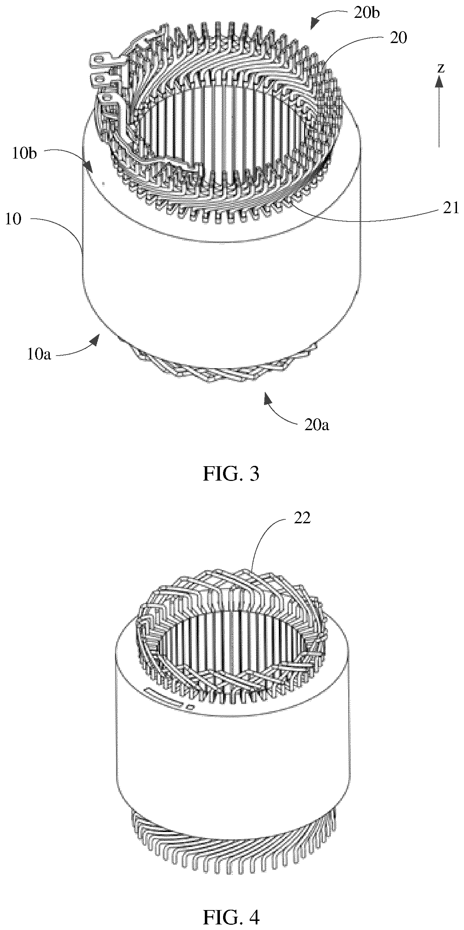

FIG. 3 is a diagram of a three-dimensional structure of a stator of a flat wire motor according to an embodiment of this application. FIG. 4 is a front view of a structure of a stator of a flat wire motor according to an embodiment of this application. As shown in FIG. 3 and FIG. 4, in an embodiment of this application, the stator includes a stator core 10 and a stator winding 20.

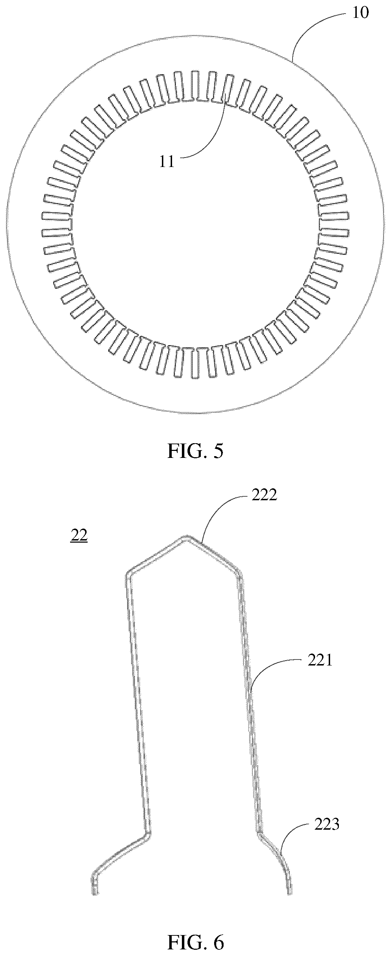

FIG. 5 is a top view of a structure of a stator core according to an embodiment of this application. As shown in FIG. 5, a plurality of stator slots 11 are provided on an inner wall of the stator core 10. A quantity of the stator slots 11 may be indicated by Z, where Z may be a natural number that is a multiple of 3, and may be specifically 48 or 54. Refer to FIG. 1 to FIG. 3. Z stator slots 11 are provided on the inner wall of the stator core 10, and are evenly provided in a circumferential direction of the inner wall of the stator core 10. Any one of the stator slots 11 extends in an axial direction (a Z direction shown in FIG. 1) of the stator core 10, and passes through the inner wall of the stator core 10 in the axial direction of the stator core 10. The stator core 10 has a wire-inlet end 10a and a wire-outlet end 10b in the axial direction of the stator core 10, and any one of the stator slots 11 may extend from the wire-inlet end 10a to the wire-outlet end 10b.

Refer to FIG. 3 and FIG. 4. In an embodiment of this application, the stator winding 20 includes flat wire conductors 21 inserted in the stator slots 11, and cross sections of the flat wire conductors 21 may be rectangular. The flat wire conductors 21 may be formed by hairpin coils. FIG. 6 is a diagram of a structure of a hairpin coil according to an embodiment of this application. As shown in FIG. 6, in an embodiment of this application, the hairpin coil 22 includes a leg 221 disposed in the stator slot 11, and a connecting portion 222 and a bending portion 223 that are disposed outside the stator slot 11. The connecting portion 222 may be U-shaped or V-shaped. Refer to FIG. 3 and FIG. 6. In an embodiment of this application, after the hairpin coil 22 is inserted in the stator slot 11, the hairpin coil 22 may be bent to form the bending portion 223. After insertion, the leg 221, inserted in the stator slot 11, of the hairpin coil 22 forms the flat wire conductor 21. After bending, head twisting directions of bending portions 223 of hairpin coils 22 are consistent. After the hairpin coils 22 are inserted in the stator slots 11, connecting portions 222 form a wire insertion end 20a of the stator winding 20, and the bending portions 223 form a welding end 20b of the stator winding 20.

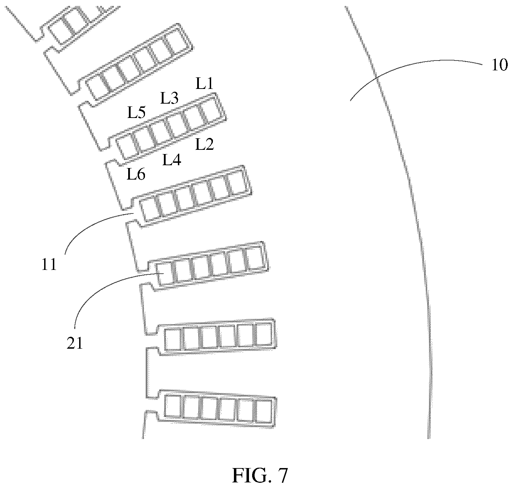

FIG. 7 is a top view of a structure of a flat wire conductor that is inserted in a stator slot according to an embodiment of this application. As shown in FIG. 7, in an embodiment of this application, N layers of flat wire conductors 21 may be disposed in any one of the stator slots 11, where N may be 6, 8, 10, or 12, or a natural number greater than 12. As shown in FIG. 7, in an embodiment of this application, N is 6. That is, six layers of flat wire conductors 21 are disposed in each of the stator slots 11. It may be understood that a quantity of layers of flat wire conductors 21 shown in FIG. 7 is merely an example. Six layers of flat wire conductors 21 may be disposed, or 10 layers of flat wire conductors 21 may be disposed.

Still refer to FIG. 3 and FIG. 7. In an embodiment of this application, the flat wire conductors 21 inserted in the stator slots 11 may form m phase windings through group connection, where m may be 2, 3, 4, 5, 6, or the like, that is, a corresponding quantity of phases of the flat wire motor may be 2, 3, 4, 5, 6, or more. Three phase windings are used as an example. The stator winding may be divided into a first phase winding, a second phase winding, and a third phase winding, which are corresponding to a U-phase winding, a V-phase winding, and a W-phase winding respectively. In the m phase windings, any phase winding may include a plurality of phase units. During connection, phase units of the first phase winding, phase units of the second phase winding, and phase units of the third phase winding are sequentially and periodically arranged along the inner wall of the stator core. Each phase unit of each phase winding is a pole phase, and a quantity of stator slots corresponding to each phase unit is a quantity of slots per pole per phase.

It may be understood that a quantity of phases of the flat wire motor is not specifically limited in this application, and the stator winding may be a single-phase winding, a three-phase winding, or a six-phase winding.

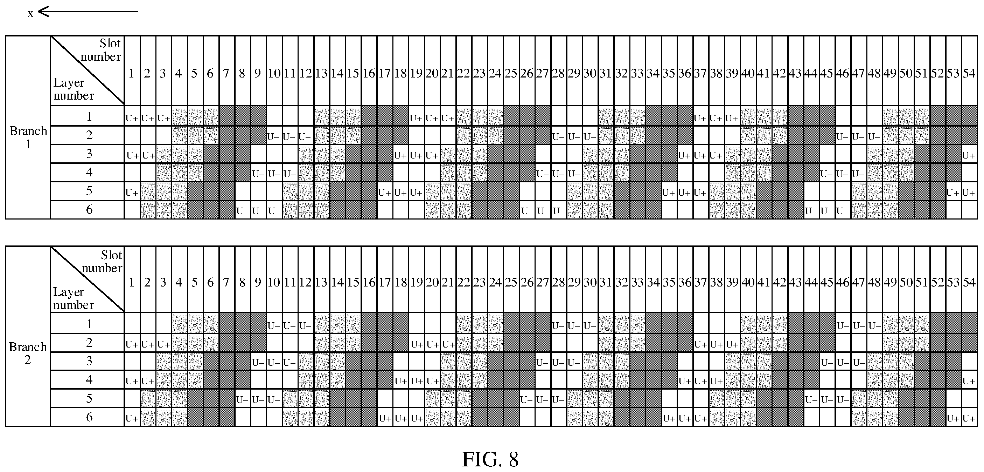

FIG. 8 is a diagram of phase band distribution of a U-phase winding according to an embodiment of this application. Refer to FIG. 7 and FIG. 8. In an embodiment of this application, in the U-phase winding, any phase unit includes at least two phase bands, each phase band of any phase unit may include two adjacent layers of flat wire conductors 21, and adjacent phase bands of any phase unit are staggered by one stator slot. N is an even number greater than or equal to 4, so that in any phase unit, the N layers of flat wire conductors 21 may be divided into N/P phase bands. For example, N is 6, six layers of flat wire conductors 21 are disposed in each of the stator slots 11, two adjacent layers of flat wire conductors may form one phase band, and there may be three phase bands. For example, N is 10, 10 layers of flat wire conductors 21 are disposed in each of the stator slots 11, two adjacent layers of flat wire conductors 21 form one phase band, and there may be five phase bands.

Still refer to FIG. 8. In the stator of the flat wire motor in embodiments of this application, adjacent phase bands of any phase unit are staggered by one stator slot 11 in a clockwise direction or in a counterclockwise direction, that is, directions of staggered stator slots 11 between adjacent phase bands of one phase unit are the same, so that an equivalent coil pitch of the stator winding is less than a pole pitch of the stator winding to a maximum extent. Compared with a conventional short-pitch winding in which any phase unit of each phase winding includes only two phase bands and adjacent phase bands of any phase unit are staggered by one or two stator slots, that is, a coil pitch of the conventional short-pitch winding is 8 or 7, the flat wire motor in embodiments of this application can effectively reduce a harmonic winding factor of the motor when a high fundamental winding factor is obtained.

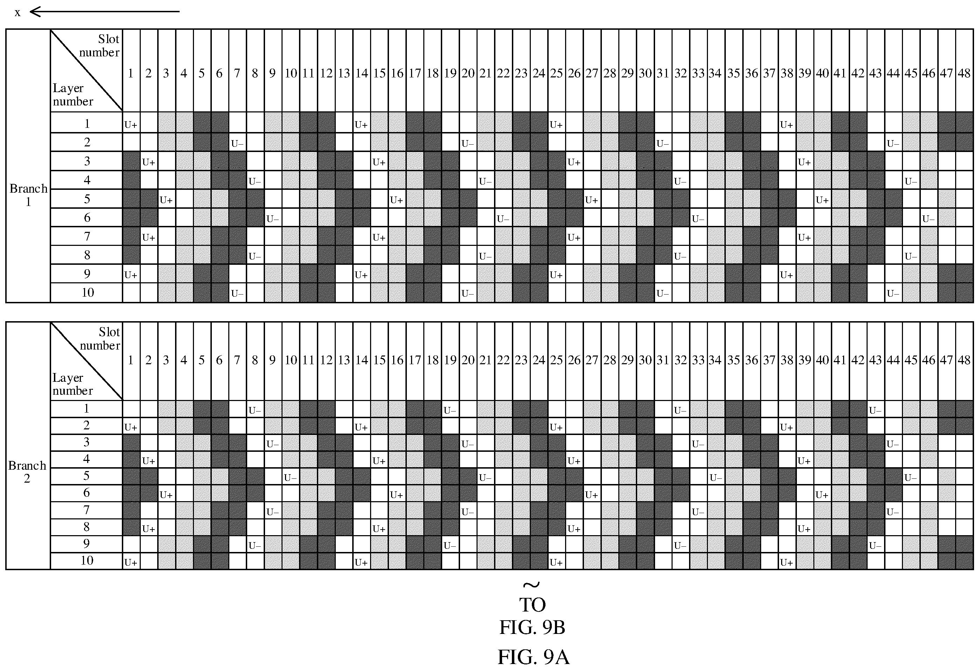

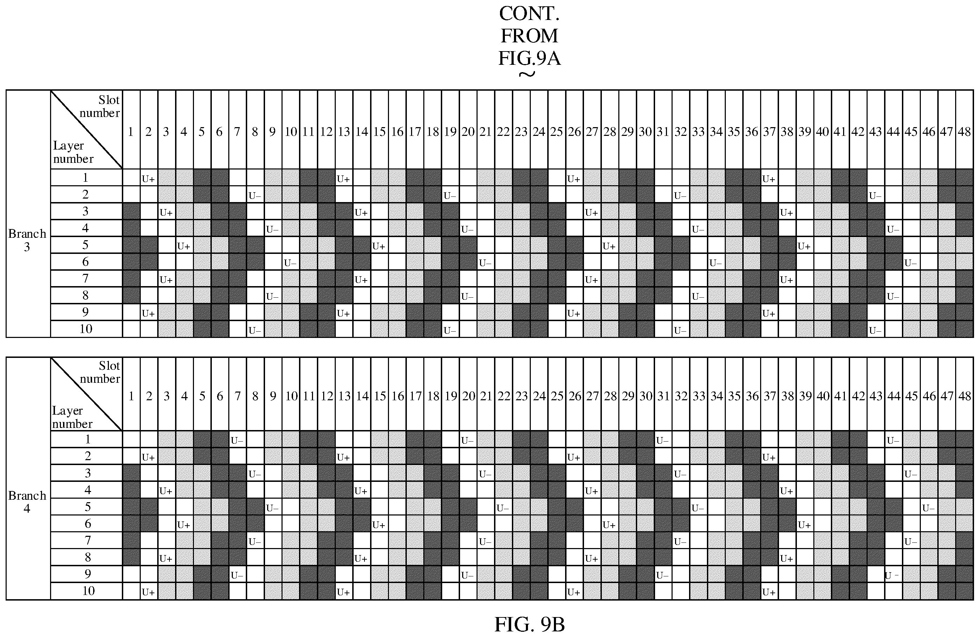

FIG. 9A and FIG. 9B are a diagram of phase band distribution of a U-phase winding according to another embodiment of this application. Refer to FIG. 9A and FIG. 9B. In an embodiment of this application, in a plurality of phase bands of one phase unit, in a direction from a first layer to an N^{th} layer of a stator slot, first several adjacent phase bands may be sequentially staggered by one stator slot in a clockwise direction, and next several adjacent phase bands are sequentially staggered by one stator slot 11 in a counterclockwise direction. Alternatively, first several adjacent phase bands may be sequentially staggered by one stator slot in a counterclockwise direction, and next several adjacent phase bands are sequentially staggered by one stator slot 11 in a clockwise direction. Alternatively, adjacent phase bands may be sequentially staggered by one stator slot 11 in a clockwise direction and a counterclockwise direction alternately. It should be noted that, when adjacent phase bands of one phase unit are staggered by one stator slot in the combination of a clockwise direction and a counterclockwise direction, any phase unit is disposed symmetrically along a perpendicular bisector that is perpendicular to the axial direction of the stator core.

It should be noted that, a quantity of slots and a direction of the stagger between adjacent phase bands are not limited in this application, and may be freely combined to flexibly satisfy different motor design requirements, to suppress torque fluctuation of a motor and reduce a harmonic winding factor, thereby improving performance of the motor.

In an embodiment of this application, each phase winding includes at least one branch. When each phase winding includes two or more parallel branches, each parallel branch includes flat wire conductors distributed at different layers in phase bands at a same layer in adjacent phase units, and flat wire conductors in one phase band are evenly distributed in different parallel branches, so that the parallel branches of each phase can maintain electric potential balance.

As shown in FIG. 8, in an embodiment of this application, each phase winding of the stator winding 20 includes two parallel circuits. Two parallel branches of the U-phase are used as an example, and are denoted as a branch 1 and a branch 2. Flat wire conductors at different layers in one phase band belong to different parallel branches, and flat wire conductors at different layers in phase bands at a same layer in adjacent phase units belong to different parallel branches. A phase band formed by a slot 1, a slot 2, and a slot 3 and a phase band formed by a slot 10, a slot 11, and a slot 12 are used as an example. The two phase bands belong to two different phase units, the phase band formed by the slot 1, the slot 2, and the slot 3 is denoted as a phase band A, and the phase band formed by the slot 10, the slot 11, and the slot 12 is denoted as a phase band B. In this case, a first layer of flat wire conductor in the phase band A belongs to the branch 1, and a second layer of flat wire conductor in the phase band A belongs to the branch 2. A first layer of flat wire conductor in the phase band B belongs to the branch 2, and a second layer of flat wire conductor in the phase band B belongs to the branch 1. In this way, different layers of flat wire conductors are disposed in the branch 1 and the branch 2, so that the branch 1 and the branch 2 can maintain electric potential balance, to reduce generation of a circulation current.

As shown in FIG. 9A and FIG. 9B, in another embodiment of this application, each phase winding of the stator winding 20 includes four parallel circuits, which are denoted as a branch 1, a branch 2, a branch 3, and a branch 4 respectively. The branch 1 is used as an example. In a phase band formed by a slot 7 and a slot 8, a second layer of flat wire conductor in the slot 7 belongs to the branch 1, a first layer of flat wire conductor in the slot 8 belongs to the branch 2, a second layer of flat wire conductor in the slot 8 belongs to the branch 3, and a first layer of flat wire conductor in the slot 7 belongs to the branch 4. For connection of other layers of flat wire conductors, reference may be made to FIG. 9A and FIG. 9B to form different parallel branches.

In an embodiment of this application, each phase winding is evenly divided into N/2 parts in the axial direction of the stator core, two adjacent layers of flat wire conductors in each part are connected to form one coil layer, and each part includes two coil layers. In a possible implementation of this application, in each phase winding, adjacent coil layers are connected by using a single crossing wire, that is, cross-layer connection is implemented by using a single crossing wire. This helps simplify a structure of the stator winding, thereby facilitating implementation.

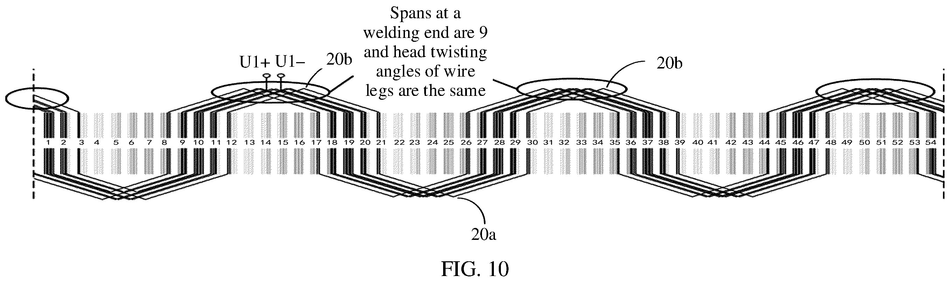

FIG. 10 is an expanded diagram of a single branch of the U-phase winding in FIG. 8. Refer to FIG. 10. In an embodiment of this application, two opposite sides of the stator winding 20 in the axial direction of the stator core 10 are a wire insertion end 20a and a welding end 20b respectively. At the welding end 20b, spans of single crossing wires between different coil layers are equal, so that head twisting angles at the welding end 20b are the same. This simplifies processes of head twisting, welding, and coating.

An embodiment of this application further provides a flat wire motor. The flat wire motor includes a rotor and the stator according to embodiments of this application. The rotor is disposed in space enclosed by the inner wall of the stator core.

An embodiment of this application further provides a powertrain. The powertrain includes a speed reducer and the foregoing flat wire motor. The flat wire motor is in transmission connection to the speed reducer. Specifically, a drive shaft of the flat wire motor may be in transmission connection to an input shaft of the speed reducer through a transmission member, for example, a coupling, to output driving force from the flat wire motor to the speed reducer.

An embodiment of this application provides a vehicle, including the foregoing powertrain. The powertrain is disposed in the vehicle and provides operating power for the vehicle. Specifically, in this embodiment, the vehicle may be specifically a new energy vehicle driven by electric energy. The new energy vehicle may be specifically a hybrid electric vehicle, a battery electric vehicle, a fuel cell electric vehicle, or the like, or may be a vehicle using an efficient accumulator, for example, a supercapacitor, a flywheel battery, or a flywheel accumulator, as a source of electric energy.

The following describes the stator winding in embodiments of this application in detail with reference to specific embodiments.

### Embodiment 1

This embodiment provides a stator winding and a stator including the stator winding. The stator further includes a stator core, the stator core has 54 stator slots, there are six layers of conductors in the stator slot, and the stator winding has six poles. The stator winding is divided into a U-phase winding, a V-phase winding, and a W-phase winding. Each phase winding has two parallel branches. Each phase winding may be divided into six pole phases, that is, six phase units, and a quantity of slots per pole per phase is 3. For a diagram of phase band distribution of the U-phase winding in this embodiment, refer to FIG. 8.

As shown in FIG. 8, there are six layers of flat wire conductors in each of the stator slots. A first layer is a slot bottom layer of the stator slot, and a sixth layer is a slot opening layer. "+" indicates that a current flows into the conductor, and "-" indicates that a current flows out of the conductor. In any phase unit, two adjacent layers of flat wire conductors form one phase band. In other words, each phase unit of each phase winding may be divided into three phase bands. Adjacent phase bands of one phase unit are staggered by one stator slot in an x direction in the figure, so that an equivalent coil pitch of the stator winding is 7, to implement short-pitch effect. It should be noted that the x direction in FIG. 8 may be a clockwise direction or a counterclockwise direction in an actual stator core.

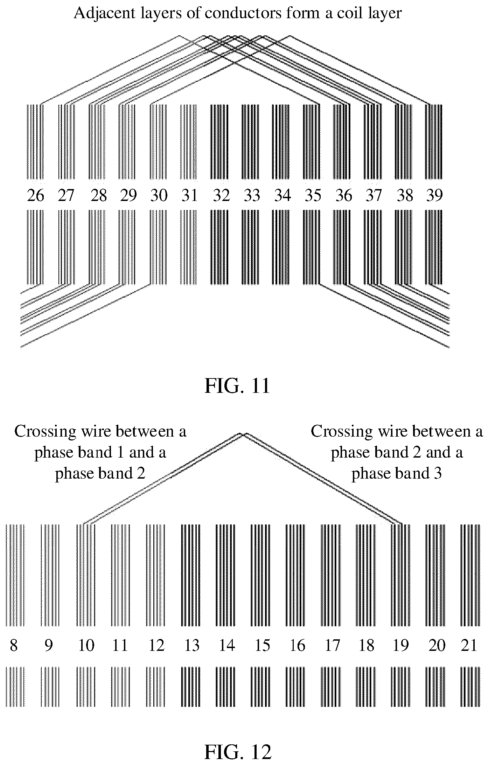

The two parallel branches of each phase winding traverse phase bands that can be arranged and positions of flat wire conductor layers, so that the parallel branches can maintain electric potential balance, and no circulation current is generated. Phase band distribution shown in FIG. 8 is used as an example. A phase band formed by a first layer of flat wire conductor and a second layer of flat wire conductor in a slot 1, a slot 2, and a slot 3 is denoted as a phase band A1, a phase band formed by a third layer of flat wire conductor and a fourth layer of flat wire conductor in a slot 54, the slot 1, and the slot 2 is denoted as a phase band A2, and a phase band formed by a fifth layer of flat wire conductor and a sixth layer of flat wire conductor in a slot 53, the slot 54, and the slot 1 is denoted as a phase band A3; a phase band formed by a first layer of flat wire conductor and a second layer of flat wire conductor in a slot 10, a slot 11, and a slot 12 is denoted as a phase band B1, a phase band formed by a third layer of flat wire conductor and a fourth layer of flat wire conductor in a slot 9, the slot 10, and the slot 11 is denoted as a phase band B2, and a phase band formed by a fifth layer of flat wire conductor and a sixth layer of flat wire conductor in a slot 8, the slot 9, and the slot 10 is denoted as a phase band B3; ...; by analogy, a phase band formed by a first layer of flat wire conductor and a second layer of flat wire conductor in a slot 46, a slot 47, and a slot 48 is denoted as a phase band F1, a phase band formed by a third layer of flat wire conductor and a fourth layer of flat wire conductor in a slot 45, the slot 46, and the slot 47 is denoted as a phase band F2, and a phase band formed by a fifth layer of flat wire conductor and a sixth layer of flat wire conductor in a slot 44, the slot 45, and the slot 46 is denoted as a phase band F3. During connection, flat wire conductors at different layers in phase bands at a same layer in adjacent phase units are distributed in different parallel branches, and flat wire conductors in one phase band are evenly distributed in different parallel branches. For example, in the phase band A1 and the phase band B1, if a first layer of flat wire conductor in the phase band A1 belongs to a branch 1, a second layer of flat wire conductor in the phase band A1 belongs to a branch 2, a first layer of flat wire conductor in the phase band B1 belongs to the branch 2, and a second layer of flat wire conductor in the phase band B1 belongs to the branch 1. By analogy, flat wire conductors in the phase bands are connected to different branches. FIG. 11 is a diagram of a connection structure of a branch 2. FIG. 12 is an enlarged diagram of a connection structure of some flat wire conductors in FIG. 11. Refer to FIG. 8, FIG. 11, and FIG. 12. During connection, a single crossing wire may be used, to connect coil layers at the welding end of the stator winding. In the branch 2, a connection manner of a fifth layer of flat wire conductor and a sixth layer of flat wire conductor is used as an example for description. A fifth layer of flat wire conductor in a slot 28, a sixth layer of flat wire conductor in a slot 37, a fifth layer of flat wire conductor in a slot 46, a sixth layer of flat wire conductor in a slot 1, a fifth layer of flat wire conductor in a slot 8, a sixth layer of flat wire conductor in a slot 17, a fifth layer of flat wire conductor in a slot 26, a sixth layer of flat wire conductor in a slot 35, a fifth layer of flat wire conductor in a slot 44, a sixth layer of flat wire conductor in a slot 53, a fifth layer of flat wire conductor in a slot 9, a sixth layer of flat wire conductor in a slot 18, a fifth layer of flat wire conductor in a slot 27, a sixth layer of flat wire conductor in a slot 36, a fifth layer of flat wire conductor in a slot 45, a sixth layer of flat wire conductor in a slot 54, a fifth layer of flat wire conductor in a slot 10, and a fourth layer of flat wire conductor in a slot 19 are sequentially connected. In this way, traversal of the fifth layer of flat wire conductor and the sixth layer of flat wire conductor is completed. For a connection manner of other layers of flat wire conductors, refer to FIG. 8, FIG. 11, and FIG. 12. Details are not described herein again.

FIG. 12 is a diagram of a connection structure of a part in the branch 2. As shown in FIG. 12, the fifth layer of flat wire conductor in the slot 10 is connected to the fourth layer of flat wire conductor in the slot 19, to complete crossing wire connection between adjacent coil layers, to be specific, a phase band formed by the fifth layer of flat wire conductor and the sixth layer of flat wire conductor is connected to a phase band formed by a third layer of flat wire conductor and a fourth layer of flat wire conductor, and a span is 9. In addition, when a third layer of flat wire conductor in the slot 10 is connected to a second layer of flat wire conductor in the slot 19, a span is also 9. Therefore, it can be learned from FIG. 10 to FIG. 12 that spans of hairpin coils at the welding end of the stator winding are 9, so that head twisting directions of the hairpin coils at the welding end can be consistent, and processing difficulty can be reduced.

It should be noted that the phase band distribution in FIG. 8 is merely an example for description. Interchanging the symbols "+" and "-" in FIG. 8, for example, replacing "U+" with "U-" and replacing "U-" with "U+" in FIG. 8, and modifying the V-phase and the W-phase correspondingly are all within the protection scope of this application.

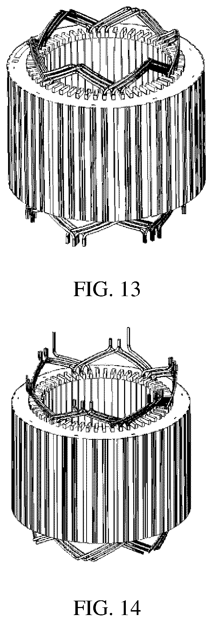

FIG. 13 and FIG. 14 are diagrams of structures of a stator core and a U-phase winding of a motor according to an embodiment. FIG. 13 focuses on a feature of a wire insertion end, and FIG. 14 focuses on a feature of a welding end. As shown in FIG. 13, at the wire insertion end, there is no need to use an additional crossing wire to connect adjacent coil layers. As shown in FIG. 14, at the welding end of the stator winding, adjacent coil layers are connected by using a single crossing wire. Specifically, a second layer and a third layer are connected by using a single crossing wire, a fourth layer and a fifth layer are connected by using a single crossing wire, and spans at the welding end are 9. Therefore, spans and head twisting angles at the welding end of the winding are the same, and welding points are distributed symmetrically along a circumference.

### Embodiment 2

This embodiment provides a stator winding and a stator including the stator winding. The stator further includes a stator core, the stator core has 48 stator slots, there are 10 layers of conductors in the stator slot, and the stator winding has eight poles. The stator winding is divided into a U-phase winding, a V-phase winding, and a W-phase winding. Each phase winding has four parallel branches. Each phase winding may be divided into eight phase units, and a quantity of slots per pole per phase is 2. The U-phase winding is used as an example. For a diagram of phase band distribution of the U-phase winding in this embodiment, refer to FIG. 9A and FIG. 9B.

As shown in FIG. 9A and FIG. 9B, there are 10 layers of flat wire conductors in each of the stator slots. A first layer is a slot bottom layer of the stator slot, and a sixth layer is a slot opening layer. "+" indicates that a current flows into the conductor, and "-" indicates that a current flows out of the conductor. In any phase unit, two adjacent layers of flat wire conductors form one phase band. In other words, each phase unit of each phase winding may be divided into five phase bands. As shown in FIG. 9A and FIG. 9B, in any phase unit, a first layer of flat wire conductor and a second layer of flat wire conductor form a first phase band, a third layer of flat wire conductor and a fourth layer of flat wire conductor form a second phase band, a fifth layer of flat wire conductor and a sixth layer of flat wire conductor form a third phase band, a seventh layer of flat wire conductor and an eighth layer of flat wire conductor form a fourth phase band, and a ninth layer of flat wire conductor and a tenth layer of flat wire conductor form a fifth phase band. In one phase unit, the second phase band (for example, a phase band formed by a third layer of flat wire conductor and a fourth layer of flat wire conductor in a slot 8 and a slot 9) is staggered by one slot relative to the first phase band (for example, a phase band formed by a first layer of flat wire conductor and a second layer of flat wire conductor in a slot 7 and the slot 8) in a direction opposite to an x direction in the figure. The third phase band (for example, a phase band formed by a fifth layer of flat wire conductor and a sixth layer of flat wire conductor in the slot 9 and a slot 10) is staggered by one slot relative to the second phase band (for example, the phase band formed by the third layer of flat wire conductor and the fourth layer of flat wire conductor in the slot 8 and the slot 9) in the direction opposite to the x direction in the figure. The fourth phase band (for example, a phase band formed by a seventh layer of flat wire conductor and an eighth layer of flat wire conductor in the slot 8 and the slot 9) is staggered by one slot relative to the third phase band (for example, the phase band formed by the fifth layer of flat wire conductor and the sixth layer of flat wire conductor in the slot 8 and the slot 9) in the x direction in the figure. The fifth phase band (for example, a phase band formed by a ninth layer of flat wire conductor and a tenth layer of flat wire conductor in the slot 7 and the slot 8) is staggered by one slot relative to the fourth phase band (for example, the phase band formed by the seventh layer of flat wire conductor and the eighth layer of flat wire conductor in the slot 8 and the slot 9) in the x direction in the figure. As shown in FIG. 9A and FIG. 9B, in this arrangement manner, an equivalent coil pitch of the stator winding is 7, to implement short-pitch effect. It should be noted that the x direction in FIG. 9A and FIG. 9B may be a clockwise direction or a counterclockwise direction in an actual stator core.

In the stator winding shown in FIG. 9A and FIG. 9B, during connection of the parallel branches, different flat wire conductors in phase bands at a same layer may be first connected. After connection of first phase bands of different phase units is completed, flat wire conductors at different coil layers may be connected by using a single crossing wire. For example, after flat wire conductors in the first phase bands are connected, the flat wire conductor in the first phase band may be connected to a flat wire conductor in a second phase band. In this connection manner, at a welding end, a span of a single crossing wire of each layer of flat wire conductor is 8. Therefore, in the stator winding in this embodiment, spans at the welding end are consistent, that is, 8, so that head twisting angles of wire legs of hairpin coils are the same. This simplifies processes of head twisting, welding, and coating.

The four parallel branches of each phase winding evenly traverse flat wire conductors in phase bands that can be arranged, so that the parallel branches can maintain electric potential balance, and no circulation current is generated.

Simulation calculation is performed on winding factors of the stator winding, the full-pitch winding, the conventional short-pitch winding with a coil pitch of 8 (as shown in FIG. 1), and the conventional short-pitch winding with a coil pitch of 7 (as shown in FIG. 2) in the foregoing embodiments, and torque fluctuation of a motor. Calculation results are as follows.

**Table 1**

| Harmonic order | Full-pitch winding | Conventional short-pitch winding with a coil pitch of 8 | Conventional short-pitch winding with a coil pitch of 7 | Short-pitch winding in Embodiment 1 |
|---|---|---|---|---|
| 1 | 0.9598 | 0.9452 | 0.9019 | 0.9212 |
| 5 | 0.2176 | 0.1399 | 0.0378 | 0.0473 |
| 7 | 0.1774 | 0.0607 | 0.1359 | 0.0314 |
| 11 | 0.1774 | 0.0607 | 0.1359 | 0.0314 |
| 13 | 0.2176 | 0.1399 | 0.0378 | 0.0473 |

It can be learned from comparison between data of the short-pitch winding in Embodiment 1 and the conventional short-pitch winding in Table 1 that, the equivalent coil pitch of the short-pitch winding in Embodiment 1 is 7, but a fundamental winding factor of the winding is far higher than that of the conventional short-pitch winding with the equivalent coil pitch of 7, and is close to that of the conventional short-pitch winding with the equivalent coil pitch of 8. This greatly reduces impact of short pitch on average torque. In addition, winding factors of a fifth harmonic, a seventh harmonic, an eleventh harmonic, and a thirteenth harmonic of the short-pitch winding in Embodiment 1 are far lower than those of the conventional short-pitch winding, and there is stronger weakening effect on a fifth harmonic, a seventh harmonic, an eleventh harmonic, and a thirteenth harmonic in a magnetic field on an armature side.

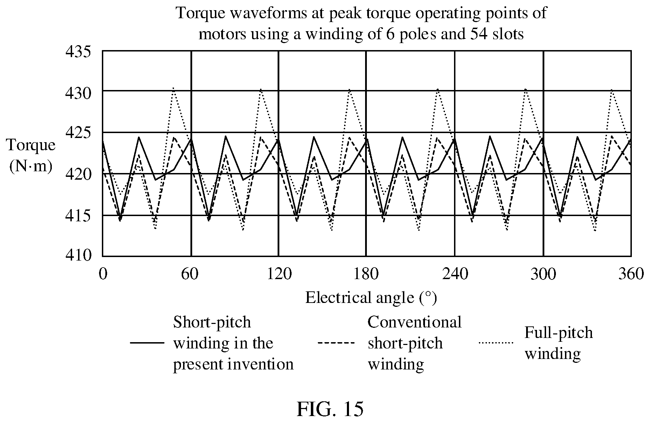

FIG. 15 is a comparison diagram of torque fluctuation at peak torque operating points of motors using a winding in Embodiment 1, a full-pitch winding, and a conventional short-pitch winding. As shown in FIG. 15, torque fluctuation of motors using a short-pitch winding greatly decreases. A peak value of torque fluctuation of the motor using the full-pitch winding is 17.3 N·m. Peak values of torque fluctuation of the motor using the conventional short-pitch winding (an equivalent coil pitch is 8) and the motor using the short-pitch winding in Embodiment 1 are 10.4 N·m and 9.7 N·m respectively, where the peak values are reduced by 40% and 44% respectively. It is clear that the flat wire short-pitch winding structure in Embodiment 1 has better suppression effect on torque fluctuation.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A stator of a flat wire motor, comprising a stator core and a stator winding, wherein a plurality of stator slots are evenly provided on an inner wall of the stator core in a circumferential direction, the stator winding comprises flat wire conductors inserted in the stator slots, N layers of the flat wire conductors are disposed in any one of the stator slots, and N is an even number greater than or equal to 4; and
the flat wire conductors are connected to form m phase windings, each phase winding comprises a plurality of phase units that are evenly disposed at spacings in the circumferential direction of the stator core, any phase unit of each phase winding comprises at least two phase bands, each phase band of any phase unit comprises two adjacent layers of the flat wire conductors, and adjacent phase bands of any phase unit are staggered by one stator slot.

2. The stator according to claim 1, wherein adjacent phase bands of any phase unit are staggered by one stator slot in a clockwise direction or in a counterclockwise direction.

3. The stator according to claim 1, wherein adjacent phase bands of any phase unit are staggered by one stator slot in a clockwise direction and a counterclockwise direction.

4. The stator according to claim 3, wherein any phase unit is disposed symmetrically along a perpendicular bisector that is perpendicular to an axial direction of the stator core.

5. The stator according to any one of claims 1 to 4, wherein each phase winding is evenly divided into N/2 parts in the axial direction of the stator core, two adjacent layers of the flat wire conductors in each part are connected to form one coil layer, and each part comprises two coil layers.

6. The stator according to claim 5, wherein in each phase winding, adjacent coil layers are connected by using a single crossing wire.

7. The stator according to claim 5 or 6, wherein two opposite sides of the stator winding in the axial direction of the stator core are a wire insertion end and a welding end respectively, and at the welding end, spans of single crossing wires between different coil layers are equal.

8. The stator according to any one of claims 1 to 7, wherein each phase winding comprises at least one branch.

9. The stator according to claim 8, wherein when each phase winding comprises at least two branches, each parallel branch comprises flat wire conductors distributed at different layers in phase bands at a same layer in adjacent phase units, and the flat wire conductors in one phase band are evenly distributed in different parallel branches.

10. The stator according to any one of claims 1 to 9, wherein a quantity of the stator slots on the inner wall of the stator core is Z, a quantity of phases of the stator winding is m, a quantity of poles of the stator winding is 2p, P is an integer, a quantity of stator slots per pole per phase is q, and Z, m, 2p, and q satisfy: q=Z/2pm.

11. A flat wire motor, comprising a rotor and the stator according to any one of claims 1 to 10, wherein the rotor is disposed in space enclosed by the inner wall of the stator core.

12. A powertrain, comprising a speed reducer and the flat wire motor according to claim 11, wherein the flat wire motor is in transmission connection to the speed reducer.

13. A vehicle, comprising the powertrain according to claim 12.
